# EUROPEAN PATENT APPLICATION

(11) **EP 4 815 390 A1**
(43) Date of publication of application: **30.09.2026**
(21) Application number: 24906024.5
(22) Date of filing: 28.11.2024
(51) Int. Cl.: H04L 41/16

(54) **MODEL TRAINING METHOD AND APPARATUS**

(30) Priority: 19.12.2023 CN 202311762388
(71) Applicant: Huawei Technologies Co., Ltd., Shenzhen, Guangdong 518129 (CN)
(72) Inventor: ZHANG, Haonan, Shenzhen, Guangdong 518129 (CN); LI, Xianming, Shenzhen, Guangdong 518129 (CN); MA, Chuan, Shenzhen, Guangdong 518129 (CN)
(74) Representative: Isarpatent
(86) International application number: PCT/CN2024/135087
(87) International publication number: WO 2025/130539

(57) **Abstract**

This application provides a model training method and a model training apparatus. The method includes: sending, by a first device, first information to a second device, where the first information is used to indicate a first model, the first model is obtained through training by the first device, and the first model is used to generate a training dataset for updating a second model, or the first model is used to fuse with the second model to update the second model, where the second model is obtained through training by the second device; and receiving, by the first device, second information, where the second information is used to indicate an updated second model. By using the method, the first device sends the first model instead of training data to the second device, thereby reducing communication overheads caused by collection of training data of the second model between the first device and the second device.

## Description

This application claims priority to Chinese Patent Application No. 202311762388.4, filed with the China National Intellectual Property Administration on December 19, 2023, and entitled "Model Training Method and Apparatus," which is incorporated herein by reference in its entirety.

### Technical Field

This application relates to the communication field, and more specifically, to a model training method and apparatus.

### Background

Artificial intelligence (AI) is a technology that mimics human cognitive, learning, and reasoning capabilities. Machine learning (ML) models, as a key technology of AI, have received extensive attention in communication technology research due to their efficient data mining and processing capabilities. In machine learning training (ML Training, MLT), a MnS user usually sends training data to an MLT MnS provider for selection during training by the MLT MnS provider. However, as a new AI paradigm, large models require massive data support during the MLT process. If the current model training method is directly applied, it will result in a significant communication resource overhead.

### Summary

This application provides a model training method and apparatus, which can reduce communication overheads related to training data collection during the model training process.

According to a first aspect, a model training method is provided, which may be performed by a first device. Here, the first device may refer to the access network device itself, or may refer to a processor, module, chip, or chip system in the first device that implements the method, which is not limited in this application. The method includes:
The first device sends first information to the second device, where the first information is used to indicate a first model, which is obtained by training by the first device, and the first model is used to generate a training dataset for updating a second model, or the first model is used to fuse with the second model to update the second model, where the second model is obtained by training by the second device; and the first device receives second information from the second device, where the second information is used to indicate the updated second model.

As an example and not a limitation, the first device may be a user of a network management service (e.g., a communication foundation large model), and the second device may be a provider of the network management service. The first model may be a data generation model, or the first model may be a model running locally on the first device, for example, when the first device is a base station, the first model may be an on-site model. The second model may be an AI/ML model implemented in a physical network to realize one or more communication functions, or may be referred to as a communication foundation large model.

It should be understood that this embodiment of this application does not limit a specific manner in which the first device obtains the second model.

As an example instead of a limitation, the second model may be preconfigured in the first device. Specifically, the second model may be configured in the first device when the first device is delivered from the factory, or the second model may be manually configured on the first device before the first device runs.

As an example instead of a limitation, the second model may be sent by the second device to the first device. Specifically, before the first device sends the first information to the second device, the second device sends configuration information to the first device, where the configuration information is used to indicate the second model.

In a possible implementation, the second device may further send at least one of the performance information of the second model, the evaluation metric information of the second model, or the function information of the second model to the first device, so that the first device may determine whether the second model meets a corresponding performance requirement in an operation process. The performance information of the second model may include information such as a quantity of parameters, a structure, and a layer quantity description of the second model; the evaluation metric information of the second model may include a performance of the second model in an available downstream task of the second model, such as an accuracy, a recall rate, or a mean square error; and the function information of the second model may include information about a communication function that can be implemented by using the model.

It should be understood that a specific manner in which the first information indicates the first model is not limited in this embodiment of this application.

As an example instead of a limitation, if the first information includes the first model, the second device may obtain the first model after receiving the first information.

As an example instead of a limitation, the first model may include a storage address of the first model. In this case, after receiving the first information, the second device may obtain the first model based on the storage address of the first model.

Optionally, when sending the first information to the second device, the first device may further send at least one of the performance information of the first model, the evaluation metric information of the first model, or the function information of the first model to the second device.

Based on the foregoing solution, the first device sends the first model to the second device, so that the second device may generate, based on the first model, a training dataset used to update the second model, and update the second model based on the training dataset; or the second device may update the first model by fusing the first model with the second model, that is, the first device may reduce communication overheads caused by collection of training data of the second model between the first device and the second device by sending the first model instead of the training data.

With reference to the first aspect, in some implementations of the first aspect, the method includes: sending, by the first device, third information to the second device, where the third information is used to indicate a use manner of the first model, and the use manner of the first model includes generating the training dataset based on the first model, or performing model fusion based on the first model.

As an example instead of a limitation, the third information may indicate the use method of the first model by using a bit 0 and a bit 1. For example, the bit 0 is used to indicate that the first model is used to generate a training dataset used to update the second model, and the bit 1 is used to indicate that the first model is used to be fused with the second model.

Based on the foregoing solution, the first device may indicate, to the second device by using the third information, the use method of the first model, thereby saving time for the second device to identify or perform trial and error for the use method of the first model, and thereby improving efficiency of using the first model by the second device.

With reference to the first aspect, in some implementations of the first aspect, when the first model is used to generate a training dataset used to update the second model, the method further includes: performing, by the first device, model training based on all or part of the local data to generate the first model, where the all or part of the local data includes a first dataset, the first dataset includes data related to a first function, and the first function is one or more functions that the first device expects to implement by using the second model.

As an example instead of a limitation, the first function may include functions such as beam management and channel measurement required by the first device, or functions such as intent management expected by the first device, or functions such as mobility prediction expected by the first device.

Based on the foregoing solution, the first device may generate the first model through model training based on all or part of the local data, where the all or part of the local data includes data related to the first function, thereby reducing overheads of model training performed by the first device and improving accuracy of model training.

With reference to the first aspect, in some implementations of the first aspect, when the first model is used to generate a training data set for updating the second model, the method further includes: fine-tuning, by the first device, the parameter of the second model based on the first function and based on a second data set, where the second data set includes data related to the first function, the second data set is included in the first data set; and determining that performance of the fine-tuned second model related to at least one of the functions in the first function does not meet a corresponding performance indicator requirement.

It should be understood that the fact that the performance of the second model related to at least one of the first functions does not meet the corresponding performance indicator requirements may be understood as that the second model includes at least one performance item related to the first function that does not meet the corresponding performance indicator requirements.

It should be understood that the fact that the second dataset is included in the first dataset may be understood as that the time period during which the second dataset is collected is included in the time period during which the first dataset is collected.

As an example rather than a limitation, if the first device is a base station, the first device may fine-tune the parameters of the second model based on the second dataset according to the required functions such as beam management and channel measurement.

As an example and not a limitation, if the first device is an OAM, the first device may fine-tune the parameters of the second model based on the second dataset according to functions such as intent management.

As an example and not a limitation, if the first device is an NWDAF, the first device may fine-tune the parameters of the second model based on the second dataset according to functions such as mobility prediction.

It should be understood that the performance indicator may be a key performance indicator (Key Performance Indicator, KPI) requirement, where the KPI requirement is determined by the first device in a process of fine-tuning the second model.

It should be understood that when the performance of the second model after fine-tuning meets the performance indicator requirement corresponding to the first function, the first device may continuously fine-tune the parameter of the second model based on all or part of local data and the first function, thereby improving performance of the model deployed locally on the first device.

Based on the foregoing solution, the first device may fine-tune the second model based on all or part of the local data based on the first function, and when the performance of the second model after fine-tuning does not meet the performance indicator requirement corresponding to the first function, perform model training on the local data to generate the first model, thereby ensuring availability of the model deployed locally on the first device.

With reference to the first aspect, in some implementations of the first aspect, when the first model is used to be fused with the second model to update the second model, the method further includes: fine-tuning, by the first device, the parameter of the second model based on all or part of the local data based on the first function, to generate the first model, where the first function is one or more functions that the first device expects to implement by using the second model.

Based on the aforementioned solution, the first device may fine-tune the second model using all or part of the local data based on the first function to generate the first model, and then send the first model to the second device, so that the second device can fuse the first model and the second model to update the second model. This approach not only reduces the communication overhead caused by the collection of training data for the second model between the first device and the second device, but also enables dynamic updating of the second model.

In combination with the first aspect, in some implementations of the first aspect, the first device is a mobile intelligent network element, and the second device is a device that supports cloud services.

It should be understood that, in this implementation, the training data of the first network element is provided by another device (for example, a base station), and the first device itself is only used for data training.

With reference to the first aspect, in some implementations of the first aspect, the first device obtains a third data set, where the third data set includes data related to a second function that is collected by a base station, and the second function includes one or more functions that the base station expects to implement through the second model; and the first device fine-tunes the parameters of the second model based on the third data set according to the second function.

Based on the aforementioned solution, the first device may perform fine-tuning on the parameters of the second model based on the second function for a device (such as a base station) that does not possess computing power, thereby improving the performance of the model deployed on the device without computing power.

In combination with the first aspect, in some implementations of the first aspect, when the first model is used to generate a training dataset for updating the second model, before the first device sends the first information to the second device, the method further includes: receiving, by the first device, fourth information, where the fourth information is used to indicate that the performance of the fine-tuned second model is abnormal; determining, by the first device, a fourth dataset based on the fourth information, where the fourth dataset is stored locally by the first device, or the fourth dataset is obtained by the first device from the base station; and performing model training based on the fourth dataset to generate the first model.

It should be understood that the fourth dataset is a collection of data related to the second function mentioned above. Moreover, the fourth dataset includes the third dataset, which means that the time period during which the fourth dataset is collected includes the time period during which the third dataset is collected.

It should be understood that the fourth dataset used by the first device for model training may be obtained by the first device from the base station when the first device determines that the first model needs to be generated, or the fourth dataset used by the first device for model training may be data reported by the base station and stored locally on the first device. This is not limited in this embodiment of this application.

With reference to the first aspect, in some implementations of the first aspect, when the first model is used to generate a training dataset for updating the second model, the method further includes: sending, by the first device, fifth information to a base station based on the fourth information, where the fifth information is used to request data collected by the base station; and receiving, by the first device, fifth information, where the fifth information is used to indicate the fourth dataset.

It should be understood that the fourth information is used to request all data collected by the base station, or the fourth information is used to request data collected by the base station that is related to the second function.

It should be understood that all data collected by the base station may be all data collected by the base station after the base station is put into operation, or all data collected by the base station may be all data collected by the base station within an interval between receiving two pieces of request information, or all data collected by the base station may be all data collected by the base station within a specific time period agreed upon by the first device and the base station. This is not limited in this embodiment of this application.

It should be understood that the data related to the second function collected by the base station may be all data related to the second function collected after the base station is put into operation; or the data related to the second function collected by the base station may be data related to the second function collected by the base station during an interval between receiving two pieces of request information; or the data related to the second function collected by the base station may be data related to the second function collected by the first device within a specific time period agreed upon with the base station. This is not limited in this embodiment of this application.

As an example rather than a limitation, the fourth information may include at least one of an identifier #1 and an identifier #2, where the identifier #1 is used to indicate a specific time period, so that each base station may report, based on the identifier #1, data collected during the specific time period, and the identifier #2 is used to indicate a specific function (for example, the second function), so that each base station may report, based on the identifier #2, data related to the specific function.

It should be understood that the first device may discard some or all of the data provided by the base station after performing model training, or the first device may store some or all of the data provided by the base station after performing model training. This is not limited in this embodiment of this application.

Based on the foregoing solution, when the base station reports that a locally deployed model of the first device has failed, the first device may perform model training based on the data collected by the base station to generate a first model, and send the first model to the second device, so that the second device can dynamically update the second model based on the data collected by the base station, thereby ensuring the performance of the model running on the base station while saving the communication overhead caused by the collection of training data for the second model between the first device and the second device.

With reference to the first aspect, in some implementations of the first aspect, before the first device sends the first information to the second device, the method further includes: performing, by the first device, lightweight processing on the first model.

Based on the foregoing solution, the first device may perform lightweight processing on the first model after generating the first model, thereby further reducing the communication overhead caused by the collection of training data for the second model between the first device and the second device.

According to a second aspect, a model training method is provided, which may be performed by a second device. Here, the second device may refer to the access network device itself, or may refer to a processor, module, chip, or chip system in the second device that implements the method, which is not limited in this application. The method includes:
The second device receives first information from the first device, where the first information is used to indicate a first model, and the first model is obtained through training by the first device. The first model is used to generate a training dataset for updating a second model, or the first model is used to fuse with the second model to update the second model, where the second model is obtained through training by the second device. The second device updates the second model based on the first model. The second device sends second information to the first device, where the second information is used to indicate the updated second model.

By way of example and not limitation, the first device may be a user of a network management service (e.g., a communication foundation large model), and the second device may be a provider of the network management service. The first model may be a data generation model, or the first model may be a model running locally on the first device. For example, when the first device is a base station, the first model may be an on-site model. The second model may be an AI/ML model implemented in a physical network to realize one or more communication functions, or may be referred to as a communication foundation large model. It should be understood that for specific ways in which the first device obtains the second model, and for specific ways in which the first information indicates the first model, reference may be made to the relevant content in the first aspect, and details are not described herein again.

Based on the foregoing solution, the first device sends the first model to the second device, so that the second device may generate, based on the first model, a training dataset used to update the second model, and update the second model based on the training dataset; or the second device may update the first model by fusing the first model with the second model. That is, the first device may send the first model instead of training data, thereby reducing communication overheads caused by collection of training data of the second model between the first device and the second device.

With reference to the second aspect, in some implementations of the second aspect, the method further includes: receiving, by the second device, third information from the first device, where the third information is used to indicate a use manner of the first model, and the use manner of the first model includes generating the training dataset based on the first model, or performing model fusion based on the first model.

It should be understood that the second device may determine the use manner of the first model based on the third information, and then update the second model based on the first model. For specific descriptions of the type of the first model, refer to related content in the fifth aspect. Details are not described herein again.

Based on the foregoing solution, the first device may indicate, to the second device by using the third information, the use method of the first model, thereby saving time for the second device to identify or perform trial and error for the use method of the first model, and thereby improving efficiency of using the first model by the second device.

With reference to the second aspect, in some implementations of the second aspect, when the first model is used to generate a training dataset for updating the second model, the updating, by the second device, the second model based on the first model includes: generating, by the second device, the training dataset based on the first model; and training, by the second device, the second model based on the training dataset, to update the second model.

With reference to the second aspect, in some implementations of the second aspect, when the first model is used to update the second model by being fused with the second model, the updating, by the second device, the second model based on the first model includes: fusing, by the second device, the first model with the second model, to update the second model.

According to a third aspect, a model training method is provided. The method may be performed by a first device, where the first device herein may refer to an access network device itself, or may refer to a processor, a module, a chip, a chip system, or the like that implements the method in the first device. This is not limited in this application. The method includes:
sending, by the first device, first information to the second device, where the first information is used to indicate a first model, the first model is obtained by training by the first device, the first model is used to generate a training dataset used to update a second model, and the second model is obtained by training by the second device; and receiving, by the first device, second information, where the second information is used to indicate the updated second model.

As an example instead of a limitation, the first device may be a user of a network management service (for example, a communication foundation large model), and the second device may be a network management service provider. The first model may be a data generation model, and the second model may be an AI/ML model, or referred to as a communication foundation large model, that implements one or more communication functions in a physical network.

It should be understood that for a specific manner in which the first device obtains the second model and a specific manner in which the first information indicates the first model, refer to related content in the first aspect. Details are not described herein again.

Based on the foregoing solution, the first device sends the first model to the second device, so that the second device may generate the training dataset used to update the second model based on the first model, and update the second model based on the training dataset. That is, the first device sends the first model instead of the training data, thereby reducing communication overheads caused by collection of training data of the second model between the first device and the second device.

With reference to the third aspect, in some implementations of the third aspect, before the first device sends the first information to the second device, the method further includes: performing, by the first device, model training based on all or part of the local data, to generate the first model, where the all or part of the local data includes a first data set, the first data set includes data related to a first function, and the first function is one or more functions that the first device expects to implement by using the second model.

With reference to the third aspect, in some implementations of the third aspect, before the first device performs model training based on all or part of the local data, the method further includes: fine-tuning, by the first device, the parameters of the second model based on the second dataset according to the first function, where the second dataset includes data related to the first function, and the second dataset is included in the first dataset; and determining that performance of the fine-tuned second model related to at least one of the functions in the first function does not meet a corresponding performance indicator requirement.

It should be understood that the second model's performance related to at least one of the functions in the first function not meeting the corresponding performance indicator requirement may be understood as that the second model's performance related to the first function includes at least one performance item that does not meet the corresponding performance indicator requirement.

With reference to the third aspect, in some implementations of the third aspect, the first device is a mobile intelligent network element, and the second device is a device that supports a cloud service.

With reference to the third aspect, in some implementations of the third aspect, the method further includes: obtaining, by the first device, a third dataset, where the third dataset includes data related to a second function and collected by the base station, and the second function includes one or more functions that the base station expects to achieve through the second model; and fine-tuning, by the first device, the parameters of the second model based on the second function and the third dataset.

With reference to the third aspect, in some implementations of the third aspect, before the first device sends the first information to the second device, the method further includes: receiving, by the first device, fourth information, where the fourth information is used to indicate an abnormal performance of the fine-tuned second model; determining, by the first device, a fourth dataset based on the fourth information, where the fourth dataset is stored locally by the first device, or the fourth dataset is obtained by the first device from the base station, and the fourth dataset includes the third dataset; and performing model training based on the fourth dataset to generate the first model.

With reference to the third aspect, in some implementations of the third aspect, the method further includes: the first device sends fifth information to a base station based on the fourth information, where the fifth information is used to request data collected by the base station; and the first device receives sixth information, where the sixth information is used to indicate the fourth data set.

With reference to the third aspect, in some implementations of the third aspect, before the first device sends the first information to the second device, the method further includes: the first device performs lightweight processing on the first model.

According to a fourth aspect, a model training method is provided, which may be performed by a second device. The second device herein may refer to an access network device itself, or may refer to a processor, a module, a chip, a chip system, or the like that implements the method in the second device. This is not limited in this application. The method includes:
The second device receives first information, where the first information is used to indicate a first model, the first model is obtained by training by the first device, the first model is used to generate a training data set for updating the second model, and the second model is obtained by training by the second device; the second device updates the second model based on the first model; and the second device sends second information to the first device, where the second information is used to indicate the updated second model.

As an example but not a limitation, the first device may be a user of a network management service (for example, a communication foundation model), and the second device may be a network management service provider. The first model may be a data generation model, and the second model may be an AI/ML model that implements one or more communication functions in a physical network, or may be referred to as a communication foundation model.

Based on the foregoing solution, the first device sends the first model to the second device, so that the second device may generate, based on the first model, a training dataset used to update the second model, and update the second model based on the training dataset. That is, the first device may send the first model instead of training data, thereby saving communication overheads caused by collecting training data of the second model between the first device and the second device.

With reference to the fourth aspect, in some implementations of the fourth aspect, the updating the second model by the second device based on the first model includes: generating, by the second device, a training dataset based on the first model; and training, by the second device, the second model based on the training dataset, to update the second model.

According to a fifth aspect, a model training method is provided, which may be performed by a first device. Here, the first device may refer to the access network device itself, or may refer to a processor, module, chip, or chip system in the first device that implements the method. This is not limited in this application. The method includes:
The first device sends first information to the second device, where the first information is used to indicate a first model, the first model is obtained through training by the first device, the first model is used to fuse with a second model to update the second model, and the second model is obtained through training by the second device; and the first device receives second information, where the second information is used to indicate the updated second model.

As an example rather than a limitation, the first device may be a user of a network management service (e.g., a communication foundation large model), the second device may be a provider of the network management service, the first model may be a model running locally on the first device, for example, when the first device is a base station, the first model may be an on-site model, and the second model may be an AI/ML model implemented in a physical network to realize one or more communication functions, or may be referred to as a communication foundation large model.

It should be understood that for a specific manner in which the first device obtains the second model and a specific manner in which the first information indicates the first model, refer to related content in the first aspect. Details are not described herein again.

Based on the foregoing solution, the first device sends the first model to the second device, so that the second device may fuse the first model with the second model to update the first model. In other words, the first device saves communication overheads caused by collection of training data of the second model between the first device and the second device by sending the second model instead of the training data.

With reference to the fifth aspect, in some implementations of the fifth aspect, the method further includes: fine-tuning, by the first device, the parameter of the second model based on all or part of the local data based on the first function, to generate the first model, where the first function is one or more functions that the first device expects to implement by using the second model.

With reference to the fifth aspect, in some implementations of the fifth aspect, the all or part of the local data includes at least a second data set, where the second data set is a set of data related to the first function.

According to a sixth aspect, a model training method is provided, which may be performed by a second device. Here, the second device may refer to the access network device itself, or may refer to a processor, module, chip, or chip system, or the like, in the second device that implements the method. This is not limited in this application. The method includes:
The second device receives first information from the first device, where the first information is used to indicate a first model, the first model is obtained by training by the first device, the first model is used to fuse with a second model to update the second model, and the second model is obtained by training by the first device; the second device updates the second model based on the first model; and the second device sends second information to the first device, where the second information is used to indicate the updated second model.

As an example rather than a limitation, the first device may be a user of a network management service (e.g., a communication foundation large model), the second device may be a provider of the network management service, the first model may be a model running locally on the first device, for example, when the first device is a base station, the first model may be an on-site model, and the second model may be an AI/ML model implemented in a physical network to realize one or more communication functions, or may be referred to as a communication foundation large model.

Based on the foregoing solution, the first device sends the first model to the second device, so that the second device may fuse the first model with the second model to update the first model. That is, the first device may send the second model instead of the training data, thereby reducing communication overheads caused by collection of the training data of the second model between the first device and the second device.

With reference to the sixth aspect, in some implementations of the sixth aspect, the updating, by the second device, the second model based on the first model includes: fusing, by the second device, the first model with the second model, to update the second model.

According to a seventh aspect, a model training apparatus is provided. The apparatus includes: a transceiver unit, configured to receive first information, where the first information is used to indicate a first model, the first model is obtained through training by the first device, the first model is used to fuse with a second model to update the second model, and the second model is obtained through training by the first device; and a processing unit, configured to update the second model based on the first model; and the transceiver unit is further configured to send second information to the first device, where the second information is used to indicate an updated second model.

With reference to the seventh aspect, in some implementations of the seventh aspect, the transceiver unit is further configured to send third information to the second device, where the third information is used to indicate a use manner of the first model, and the use manner of the first model includes generating the training dataset based on the first model, or performing model fusion based on the first model.

With reference to the seventh aspect, in some implementations of the seventh aspect, the model training apparatus further includes a processing unit, where the processing unit is configured to perform model training based on all or part of the local data to generate the first model, where the all or part of the local data includes a first dataset, the first dataset includes data related to a first function, and the first function is one or more functions that the model training apparatus expects to implement by using the second model.

With reference to the seventh aspect, in some implementations of the seventh aspect, the processing unit is further configured to: fine-tune the parameter of the second model based on the second dataset based on the first function, where the second dataset includes data related to the first function, the second dataset is a subset of the first dataset; and determine that performance of the fine-tuned second model related to at least one of the functions in the first function does not meet a corresponding performance indicator requirement.

According to the seventh aspect, in some implementations of the seventh aspect, the processing unit is further configured to fine-tune the parameters of the second model based on all or part of the local data according to the first function, to generate the first model, where the first function is one or more functions that the first device expects to achieve through the second model.

According to the seventh aspect, in some implementations of the seventh aspect, the model training apparatus is a mobile intelligent network element, and the second device is a device supporting cloud services.

With reference to the seventh aspect, in some implementations of the seventh aspect, the transceiver unit is further configured to receive fourth information, where the fourth information is used to indicate an abnormal performance of the fine-tuned second model; the processing unit is further configured to determine a fourth data set based on the fourth information, where the fourth data set is stored locally on the first device, or the fourth data set is obtained by the first device from the base station, and the fourth data set includes the third data set; and the processing unit is further configured to perform model training based on the fourth data set to generate the first model.

According to the seventh aspect, in some implementations of the seventh aspect, the processing unit is further configured to send fifth information to the base station based on the fourth information, where the fifth information is used to request data collected by the base station; and the transceiver unit is further configured to receive fifth information, where the fifth information is used to indicate the fourth data set.

With reference to the seventh aspect, in some implementations of the seventh aspect, before the first device sends the first information to the second device, the processing unit is further configured to perform lightweight processing on the first model.

According to an eighth aspect, a model training apparatus is provided, where the apparatus includes: a transceiver unit, configured to receive first information, where the first information is used to indicate a first model, the first model is obtained by training by the first device, and the first model is used to generate a training data set for updating a second model, or the first model is used to fuse with the second model to update the second model, where the second model is obtained by training by the second device; a processing unit, configured to update the second model based on the first model; and the transceiver unit is further configured to send second information to the first device, where the second information is used to indicate the updated second model.

With reference to the eighth aspect, in some implementations of the eighth aspect, the transceiver unit is further configured to receive third information from the first device, where the third information is used to indicate a use manner of the first model, and the use manner of the first model includes generating the training dataset based on the first model, or performing model fusion based on the first model.

With reference to the eighth aspect, in some implementations of the eighth aspect, the model training apparatus further includes a processing unit, where the processing unit is configured to generate a training dataset based on the first model; and train the second model based on the training dataset, to update the second model.

With reference to the eighth aspect, in some implementations of the eighth aspect, the processing unit is further configured to fuse the first model and the second model, to update the second model.

According to a ninth aspect, a model training apparatus is provided. The apparatus includes: a transceiver unit, where the transceiver unit is configured to send first information to a second device, where the first information is used to indicate a first model, the first model is obtained by training by the first device, the first model is used to generate a training dataset for updating a second model, and the second model is obtained by training by the second device; and the transceiver unit is further configured to receive second information, where the second information is used to indicate an updated second model.

It should be understood that the ninth aspect is an implementation on an apparatus side corresponding to the third aspect. The descriptions of the supplements, explanations, and beneficial effects of the third aspect are also applicable to the ninth aspect, and details are not described again.

According to a tenth aspect, a model training apparatus is provided. The apparatus includes: a transceiver unit, configured to receive first information, where the first information is used to indicate a first model, the first model is obtained by training by the first device, the first model is used to generate a training data set used to update a second model, and the second model is obtained by training by the second device; and a processing unit, configured to update the second model based on the first model. The transceiver unit is further configured to send second information to the first device, where the second information is used to indicate the updated second model.

It should be understood that the tenth aspect is an implementation on an apparatus side corresponding to the fourth aspect. The descriptions of the supplements, explanations, and beneficial effects of the fourth aspect are also applicable to the tenth aspect, and details are not described again.

According to an eleventh aspect, a model training apparatus is provided. The apparatus includes: a transceiver unit, where the transceiver unit is configured to send first information to a second device, where the first information is used to indicate a first model, the first model is obtained by training by the first device, the first model is used to update a second model by being fused with the second model, and the second model is obtained by training by the second device; and the transceiver unit is further configured to receive second information, where the second information is used to indicate the updated second model.

It should be understood that the eleventh aspect is an implementation on an apparatus side corresponding to the fifth aspect. The descriptions of the supplements, explanations, and beneficial effects of the fifth aspect are also applicable to the eleventh aspect, and details are not described again.

According to a twelfth aspect, a model training apparatus is provided. The apparatus includes: a transceiver unit, configured to receive first information, where the first information is used to indicate a first model, the first model is obtained by training by the first device, the first model is used to update a second model by being fused with the second model, and the second model is obtained by training by the second device; and a processing unit, configured to update the second model based on the first model; and the transceiver unit is further configured to send second information to the first device, where the second information is used to indicate the updated second model.

It should be understood that the twelfth aspect is an implementation on an apparatus side corresponding to the sixth aspect. The descriptions of the supplements, explanations, and beneficial effects of the sixth aspect are also applicable to the twelfth aspect, and details are not described again.

According to a thirteenth aspect, this application provides a model training apparatus, where the model training apparatus includes a processor, configured to implement the method according to any one of the first aspect to the sixth aspect or the implementations of the first aspect to the sixth aspect. The processor is coupled to a memory, the memory is configured to store instructions and data, and when the processor executes the instructions stored in the memory, the method according to any one of the first aspect to the sixth aspect or the implementations of the first aspect to the sixth aspect may be implemented.

Optionally, the communication apparatus may further include a memory. Optionally, the memory may be coupled to the processor. Optionally, the communication apparatus may further include a communication interface, where the communication interface is configured to enable the apparatus to communicate with another device. For example, the communication interface may be a transceiver, a hardware circuit, a bus, a module, a pin, or a communication interface of another type.

In an example, the communication apparatus may be a first device, or may be an apparatus, a module, a chip, or the like disposed in the first device, or may be an apparatus that can be used in a matching manner with the first device.

In another example, the communication apparatus may be a second device, or may be an apparatus, a module, a chip, or the like disposed in the second device, or may be an apparatus that can be used in a matching manner with the second device.

According to a fourteenth aspect, this application provides a system, including a first device, configured to perform the method according to the first aspect, the third aspect, the fifth aspect, or any implementation of the first aspect, the third aspect, or the fifth aspect; and a second device, configured to perform the method according to the second aspect, the fourth aspect, the sixth aspect, or any implementation of the second aspect, the fourth aspect, or the sixth aspect.

According to a fifteenth aspect, this application further provides a computer program. When the computer program is run on a computer, the computer is enabled to perform the method according to any one of the first aspect to the sixth aspect or the implementations of the first aspect to the sixth aspect.

According to a sixteenth aspect, this application further provides a computer program product, including an instruction, where when the instruction is run on a computer, the computer is enabled to perform the method according to any one of the first aspect to the sixth aspect or the implementations of the first aspect to the sixth aspect.

According to a seventeenth aspect, this application further provides a computer-readable storage medium, where the computer-readable storage medium stores a computer program or an instruction, and when the computer program or the instruction is run on a computer, the computer is enabled to perform the method according to any one of the first aspect to the sixth aspect or the implementations of the first aspect to the sixth aspect.

According to an eighteenth aspect, this application further provides a chip, where the chip is configured to read a computer program stored in a memory, and perform the method according to any one of the first aspect to the sixth aspect or the implementations of the first aspect to the sixth aspect; or the chip includes an execution unit configured to perform the method according to any one of the first aspect to the sixth aspect or the implementations of the first aspect to the sixth aspect.

According to a nineteenth aspect, this application further provides a chip system, where the chip system includes a processor, configured to support an apparatus in implementing the method according to any one of the first aspect to the sixth aspect or the implementations of the first aspect to the sixth aspect. In a possible design, the chip system further includes a memory, where the memory is configured to store a program and data necessary for the apparatus. The chip system may include a chip, or may include a chip and another discrete component.

For descriptions of beneficial effects of any one of the seventh aspect to the nineteenth aspect, refer to the descriptions of the beneficial effects of the first aspect to the sixth aspect. Details are not described herein again.

### Brief Description of the Drawings

FIG. 1 is a schematic diagram of a network architecture;
FIG. 2 is a schematic diagram of a current MLT procedure;
FIG. 3 is a schematic diagram of a model training method 300 according to an embodiment of this application;
FIG. 4 is a schematic diagram of a model training procedure 400 according to an embodiment of this application;
FIG. 5 is a schematic diagram of a model training procedure 500 according to an embodiment of this application;
FIG. 6 is a schematic diagram of a model training procedure 600 according to an embodiment of this application;
FIG. 7 is a schematic diagram of a model training apparatus 1000 according to an embodiment of this application;
FIG. 8 is a schematic diagram of another model training apparatus 1100 according to an embodiment of this application.

### Specific Implementation

The technical solutions of this application are described below with reference to the accompanying drawings.

For ease of understanding, a communication system to which the embodiments of this application may be applied is first described.

The embodiments of this application may be applied to various communication systems, for example, a Long Term Evolution (long term evolution, LTE) system, an LTE frequency division duplex (frequency division duplex, FDD) system, an LTE time division duplex (time division duplex, TDD) system, a public land mobile network (public land mobile network, PLMN), a 5th generation (5th generation, 5G) system, a 6th generation (6th generation, 6G) system, or a future communication system. The 5G system in this application includes a non-standalone (non-standalone, NSA) 5G mobile communication system or a standalone (standalone, SA) 5G mobile communication system. The embodiments of this application may also be applied to non-terrestrial network (non-terrestrial network, NTN) communication systems such as a satellite communication system. The embodiments of this application may also be applied to a device-to-device (device to device, D2D) communication system, a sidelink (sidelink, SL) communication system, a machine-to-machine (machine to machine, M2M) communication system, a machine type communication (machine type communication, MTC) system, an Internet of things (Internet of things, IoT) communication system, a vehicle to everything (vehicle to everything, V2X) communication system, an unmanned aerial vehicle (uncrewed aerial vehicle, UAV) communication system, or another communication system.

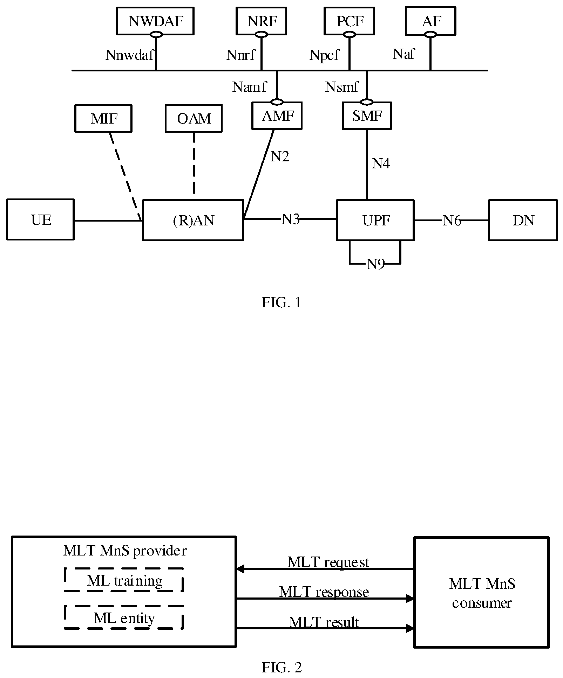

As an example, Figure 1 illustrates a schematic diagram of a network architecture.

As shown in Figure 1, the network architecture uses the 5G system (the 5th generation system, 5GS) as an example. This network architecture may include three parts: a user equipment (user equipment, UE) part, a data network (data network, DN) part, and an operator network part. The operator network may include one or more of the following network elements: (radio) access network (R)AN device, user plane function (user plane function, UPF) network element, access and mobility management function (access and mobility management function, AMF) network element, session management function (session management function, SMF) network element, network data analytics function (network data analytics function, NWDAF) network element, policy control function (policy control function, PCF) network element, application function (application function, AF) network element, mobile intelligent function (Mobile Intelligence Function, MIF) network element, and network management (Operations, Administration And Management, OAM) network element. In the operator network mentioned above, the parts other than the (R)AN part may be referred to as the core network part.

In this application, the user equipment, (radio) access network device, UPF network element, AMF network element, SMF network element, NWDAF network element, PCF network element, AF network element, MIF network element, and OAM network element are respectively abbreviated as UE, (R)AN, UPF, AMF, SMF, NWDAF, PCF, AF, MIF, and OAM.

The following provides a brief description of the network elements involved in Figure 1.

### 1. UE

The UE in this application may also be referred to as a terminal, a user, an access terminal, a subscriber unit, a subscriber station, a mobile station, a mobile console, a remote station, a remote terminal, a mobile device, a user terminal, a terminal device, a wireless communication device, a user agent, a user apparatus, or the like. For ease of description, the UE is uniformly referred to as a terminal in the following.

A terminal is a device that can access a network. The terminal may communicate with a (R)AN by using a certain air interface technology (such as NR or LTE technology). The terminal may also communicate with another terminal by using a certain air interface technology (such as NR or LTE technology). The terminal may be a mobile phone (mobile phone), a tablet computer (pad), a computer with wireless transceiver functionality, a virtual reality (virtual reality, VR) terminal, an augmented reality (augmented reality, AR) terminal, a terminal in satellite communications, a terminal in an integrated access and backhaul (IAB) system, a terminal in a WiFi communications system, a terminal in industrial control (industrial control), a terminal in self driving (self driving), a terminal in remote medical (remote medical), a terminal in smart grid (smart grid), a terminal in transportation safety (transportation safety), a terminal in smart city (smart city), a terminal in smart home (smart home), or the like.

The embodiments of this application do not limit the specific technology or device form used by the UE.

### 2. (R) AN

The (R) AN in this application may be a device configured to communicate with a terminal, or may be a device that connects a terminal to a wireless network.

The (R) AN may be a node in a radio access network. The (R) AN may be a base station (base station), an evolved NodeB (evolved NodeB, eNodeB), a transmission reception point (transmission reception point, TRP), a home evolved NodeB (for example, home evolved NodeB, or home Node B, HNB), a Wi-Fi access point (access point, AP), a mobile switching center, a next generation NodeB (next generation NodeB, gNB) in a 5G mobile communication system, an access network device in an open radio access network (open radio access network, O-RAN, or open RAN), a next generation NodeB in a 6th generation (6th generation, 6G) mobile communication system, a base station in a future mobile communication system, or the like. The network device may alternatively be a module or unit that completes some functions of the base station, for example, may be a central unit (central unit, CU), a distributed unit (distributed unit, DU), a remote radio unit (remote radio unit, RRU), a baseband unit (baseband unit, BBU), or the like. The (R) AN may also be a device that assumes the functions of a base station in a D2D communication system, a V2X communication system, an M2M communication system, an IoT communication system, or the like. The (R) AN may also be a network device in an NTN, that is, the (R) AN may be deployed on an unmanned aerial vehicle (UAV) or a satellite. The (R) AN may be a macro base station, a micro base station, an indoor base station, a relay node, a donor node, or the like.

Specific technologies, device forms, and names used by the (R) AN are not limited in embodiments of this application.

### 3. UPF

The UPF mainly provides functions such as data packet routing and forwarding, mobility anchor, an uplink classifier to support routing a service flow to a data network, and a branch point to support a multi-homed PDU session.

### 4. DN

The DN is mainly an operator network used to provide a data service for a terminal, for example, the Internet (Internet), a third-party service network, or an IP multimedia service (IP multi-media service, IMS) network.

### 5. AMF

The main functions of the AMF include managing user registration, reachability detection, selection of SMF nodes, and management of mobility state transitions.

### 6. SMF

The main functions of the SMF include controlling the establishment, modification, and deletion of sessions, and selecting user plane nodes.

### 7. NWDAF

It has functions such as data collection, model training, data analysis, and model inference. It can be used to collect relevant data from network elements, third-party service servers, terminal devices, or network management systems. Based on the collected data, it performs data analysis or model training, and provides the analysis results to network elements, third-party service servers, terminal devices, or network management systems. Alternatively, it can provide trained models to other network elements with data analysis capabilities.

### 8. PCF

The PCF is primarily responsible for decision-making in policy control, providing policy rules for control plane functions, and implementing traffic-based charging control functions.

### 9. AF

The AF primarily supports interaction with the 3GPP core network to provide services, such as influencing data routing decisions, policy control functions, or offering third-party services to the network. The AF can be either an AF deployed by the operator's network itself or a third-party AF. The DCAF is a special type of AF that is mainly responsible for collecting data from UE applications and making it available to network elements such as NWDAFs within the network.

### 10. OAM

The primary responsibilities include the analysis, prediction, planning, and configuration of daily network and services, as well as testing and fault management of the network and its services. OAM can interact with RAN to obtain UE location information measured by the RAN on the RAN side or reported by UEs from UE measurements.

### 11. MIF

The MIF is responsible for the artificial intelligence (AI) or machine learning (ML) functions of the base station, including data management functions, computing power management functions, and model management functions. Among these, the data management function may include data collection, data storage, and data analysis; the computing power management function may include computing power awareness, computing power scheduling, and coordination between computing power and transmission; the model management function may include model training, model inference, and model lifecycle management. The MIF may take the form of a base station, an independent network element separate from the base station, an independent network function separate from the base station, a sub-module within the base station, or a sub-function within the base station. For example, in Figure 1, the MIF is an independent network element/network function separate from the base station.

In the network architecture illustrated in Figure 1, communication between network elements may be achieved through interfaces. The interfaces between the network elements may be point-to-point interfaces or service-based interfaces, which is not limited in this application.

It should be understood that the network architecture described above is merely an example for illustration. The network architecture applicable to the embodiments of this application is not limited thereto. Any network architecture capable of implementing the functions of the aforementioned network elements is suitable for the embodiments of this application.

It should also be understood that the functions or network elements such as the UE, (R) AN, UPF, AMF, SMF, NWDAF, PCF, AF, MIF, and OAM shown in Figure 1 may be understood as network elements configured to implement different functions, for example, they may be combined as needed to form network slices. These network elements may be independent devices, or they may be integrated into the same device to perform different functions. Alternatively, they may be network components within a hardware device, software functions running on dedicated hardware, or virtualized functions instantiated on a platform (e.g., a cloud platform). The specific forms of these network elements are not limited in this application.

It should also be understood that the aforementioned naming is defined only for the purpose of distinguishing different functions and should not constitute any limitation on this application. This application does not exclude the possibility of using other names in 6G networks or other future networks. For example, in a 6G network, some or all of the above-mentioned network elements may use the terminology from 5G, or may use other names, etc.

To facilitate an understanding of the embodiments of this application, a brief explanation of several basic concepts involved in the embodiments of this application is provided below.

### 1. Machine Learning (ML)

As a key technology of Artificial Intelligence (AI), machine learning (ML) models have garnered widespread attention in communication technology research due to their efficient data mining and processing capabilities. The training process of ML models in communication networks is one of the important research directions in the 3rd Generation Partnership Project (3GPP) Release 18 (R18) standards. Efficient training of ML models can enhance their performance in practical communication applications, while also facilitating subsequent deployment, management, and large-scale application of these models. Among these, SA5 TS 28.105 specifies the overall framework and data requirements for the training of ML models. In this context, the Machine Learning Training (MLT) Network Service (Management Services, MnS) provider utilizes current and historical relevant data to monitor the network or services associated with ML models, prepare data, and trigger and execute the training.

### 2. Large Models

A large model is an artificial neural network model that contains at least hundreds of millions of parameters, which needs to be optimized and trained using computers and massive amounts of existing data. It has powerful reasoning and generalization capabilities. As a new machine learning paradigm, large models enable performance breakthroughs in multiple application areas, including natural language processing (NLP). Large models leverage an enormous number of parameters, massive data, and computational resources, as well as model architectures capable of capturing global data relationships, to achieve unprecedented reasoning and generalization capabilities. With just a pre-trained model, these models can adapt to a wide range of application tasks and achieve optimal performance through fine-tuning or few-shot/zero-shot learning. Given that 3GPP Release 19 standard research has begun to focus on natural language intent, large models may serve as a potential technical solution for natural language intent translation. In addition, large models, with their strong reasoning capabilities, have significant application potential in communication networks, such as physical layer radio resource allocation, optimization of operations on the network management plane, and intelligent control in the core network.

### 3. Fine-tuning

This refers to the process of training a pre-trained artificial neural network model using specific information for one or more particular tasks. For example, to enable an artificial neural network model to perform machine translation, the model, which has already been pre-trained, is further trained using a bilingual parallel corpus.

### 4. Data generation model

An artificial neural network model that has the ability to fit the data distribution. After training, for a given input, the model can generate more output results that conform to this distribution. For instance, in the application of Generative Adversarial Networks (GANs) in text generation tasks, the model is trained using a large amount of natural language data, enabling it to output a set of natural language results similar to the training corpus when given any white noise input.

Figure 2 illustrates the current MLT (Machine Learning Training) process. Considering the insufficient computational resource deployment on the user side of the MLT MnS (Machine Learning Training Microservice), while the provider side (e.g., OAM) of the MLT MnS is more convenient for computational resource deployment, the model training is typically completed by the MLT MnS provider. As shown in Figure 2, the MLT MnS user sends a training request to the MLT MnS provider to initiate the ML entity (model) training process, while the MLT MnS user also provides historical or currently available training data for the MLT MnS provider to select. The MLT MnS provider responds to the training request from the MLT MnS user, selects the training data, and performs the model training. After the training is completed, the training results are sent back to the MLT MnS user for selection and use.

As can be seen from the above, during the training process of an ML model, the MLT MnS user needs to send training data to the MLT MnS provider for selection during the training by the provider. However, the training of large models requires massive amounts of data. If the current ML model training methods are directly applied, the data collection process would result in significant communication resource overhead between network elements (especially between the MLT MnS user and the MLT MnS provider). For example, in the context of reliable wireless transmission considering high time sensitivity scenarios, where data sampling is performed on users in a 100,000-user wireless network with a sampling period of 10ms, and assuming that 100 user features are required, with each feature needing 4 bits for representation, the amount of user data that needs to be uploaded per minute in this network would be approximately 4GB, resulting in substantial communication resource overhead.

In view of this, this application proposes a model training method and apparatus, which can avoid an MLT MnS provider from directly loading a massive amount of training data from an MLT MnS user during the training of a large model, thereby saving the communication overhead incurred by the data collection process.

For ease of understanding embodiments of this application, the following provides several descriptions before embodiments of this application are described.

In this application, "used to indicate" or "indicate" may include direct indication and indirect indication, or "used to indicate" or "indicate" may explicitly and/or implicitly indicate. For example, when information is described as being used to indicate information I, it may include that the information directly indicates I or indirectly indicates I, but does not necessarily mean that the information carries I. For another example, implicit indication may be based on a location and/or a resource used for transmission, and explicit indication may be based on one or more parameters, and/or one or more indexes, and/or one or more bit patterns represented thereby.

The definitions of many features provided in this application are merely used to explain functions of the features by way of examples. For details, refer to the prior art.

In the embodiments shown below, the first, second, third, fourth, and various numbers are merely used for differentiation for ease of description, and are not intended to limit the scope of the embodiments of this application, for example, to distinguish different fields, different information, or the like.

"Predefining" may be implemented by pre-storing corresponding code, tables, or other information in a device in a manner that may be used to indicate the information. A specific implementation manner thereof is not limited in this application. "Storing" herein may mean that the information is stored in one or more memories. The memory may be of any form of storage medium, and this is not limited in this application.

The "protocol" in the embodiments of this application may be a standard protocol in the communications field, for example, may include a long term evolution (long term evolution, LTE) protocol, a new radio (new radio, NR) protocol, and a related protocol applied to a future communications system. This is not limited in this application.

This application presents various aspects, embodiments, or features with reference to a system that includes multiple devices, components, modules, and the like. It should be understood and appreciated that each system may include additional devices, components, modules, and the like, and/or may not include all devices, components, modules, and the like discussed with reference to the accompanying drawings. In addition, combinations of these solutions may also be used.

In embodiments of this application, terms such as "example", "for example", "as an example", and "as another example" are used to indicate an example, an illustration, or a description. Any embodiment or design solution described as "an example" in this application should not be construed as being more preferred or having more advantages than another embodiment or design solution. To the contrary, the use of the term "example" is intended to present the concept in a concrete manner.

The terms "include", "comprise", "have", and their variants all mean "include but not limited to", unless otherwise specifically emphasized.

"At least one" means one or more, and "a plurality of" means two or more. The term "and/or" describes an association relationship between associated objects, and indicates that three relationships may exist. For example, A and/or B may indicate the following three cases: Only A exists, both A and B exist, or only B exists, where A and B may be singular or plural. The character "/" generally indicates an "or" relationship between the associated objects. "At least one of the following" or a similar expression thereof refers to any combination of these items, including any combination of a single item or a plurality of items. For example, "at least one of a, b, and c" may indicate: a, or b, or c, or a and b, or a and c, or b and c, or a, b, and c, where a, b, and c may each be singular or plural.

In the embodiments of this application, the descriptions related to NE A sending a message, information, or data to NE B, and NE B receiving the message, information, or data from NE A, are intended to indicate to which network element the message, information, or data is to be sent, without limiting whether they are sent directly or indirectly via another network element.

In the embodiments of this application, descriptions such as "when...," "under the condition of...," "if," and "when" mean that a device performs corresponding processing under a certain objective condition, which does not limit the time, nor do they require the device to necessarily perform a judgment action during implementation, nor do they imply any other limitations.

It should be understood that in the embodiments of this application, the base station and the access network device may be the same concept, and the two may be used interchangeably.

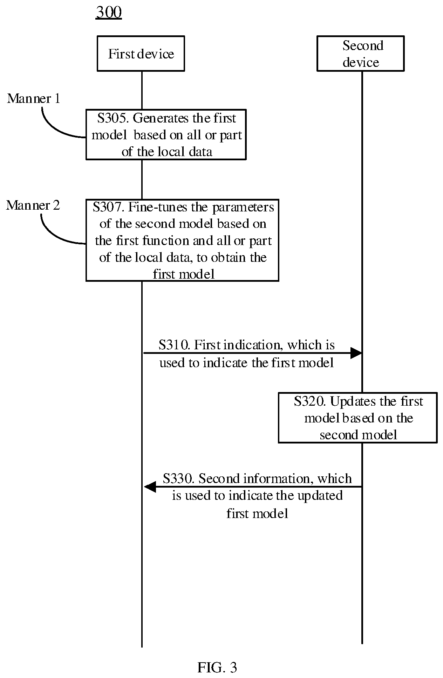

FIG. 3 is a schematic diagram of a model training method 300 according to an embodiment of this application. As shown in the figure, the method 300 includes the following steps:
S310: The first device sends first information to the second device, and correspondingly, the second device receives the first information. The first information is used to indicate a first model, and the first model is used to generate a training dataset for updating the second model.

In this embodiment of this application, the first device may be a user of a network management service (for example, a communication foundation large model), the second device may be a network management service provider, the first model may be a data generation model, and the second model may be an AI/ML model (or referred to as a communication foundation large model) that implements one or more communication functions in a physical network.

It should be understood that a specific manner in which the first device obtains the second model is not limited in this embodiment of this application.

As an example instead of a limitation, the second model may be preconfigured in the first device. Specifically, the second model may be configured in the first device when the first device is delivered from the factory, or the second model may be manually configured on the first device before the first device runs.

As an example instead of a limitation, the second model may be sent by the second device to the first device. Specifically, before step S310, the second device sends configuration information to the first device, where the configuration information is used to indicate the second model.

Optionally, the second device may further send at least one of the performance information of the second model, the evaluation metric information of the second model, or the function information of the second model to the first device, so that the first device may determine whether the second model meets a corresponding performance requirement in a running process. The performance information of the second model may include information such as a quantity of parameters, a structure, and a quantity of layers of the second model; the evaluation metric information of the second model may include performance of the second model in an available downstream task of the second model, such as accuracy, recall, and mean square error; and the function information of the second model may include information about a communication function that can be implemented by using the model.

It should be understood that a specific manner in which the first information indicates the first model is not limited in this embodiment of this application.

As an example instead of a limitation, if the first information includes the first model, the second device may obtain the first model after receiving the first information.

As an example instead of a limitation, the first model may include a storage address of the first model. In this case, after receiving the first information, the second device may obtain the first model based on the storage address of the first model.

Optionally, when sending the first information to the second device, the first device may further send at least one of the performance information of the first model, the evaluation metric information of the first model, or the function information of the first model to the second device.

In some possible implementations, the first device may send third information to the second device, where the third information is used to indicate a use method of the first model, and the use method of the first model includes generating a training dataset based on the first model, or performing model fusion based on the first model.

It should be understood that a specific manner in which the third information indicates the use method of the first model is not limited in this embodiment of this application.

As an example instead of a limitation, the third information may indicate the use method of the first model by using a bit 0 and a bit 1. For example, the bit 0 is used to indicate that a training dataset is generated based on the first model, and the bit 1 is used to indicate that model fusion is performed based on the first model.

It should be understood that the first device may send the third information when sending the first information, for example, add the first information and the third information to a same message; or the first device may send the third information after sending the first information. This is not limited in this embodiment of this application.

It is easy to understand that, by distinguishing the use method of the first model, before step S310, the method 300 further includes the following steps:

### Manner 1: Generating a training dataset based on the first model:

S305: The first device performs model training based on all or part of the local data, to generate the first model.

All or part of the data of the first device includes at least a first data set, where the first data set is a set of data related to a first function, and the first function includes one or more functions that the first device expects to implement through the second model.

As an example instead of a limitation, the first function may include functions such as beam management and channel measurement required by the first device, or functions such as intent management expected by the first device, or functions such as mobility prediction expected by the first device.

It should be understood that a trigger condition for the first device to perform step S305 is not limited in this embodiment of this application.

In a possible implementation, the first device periodically performs model training based on the local data. A period for the first device to perform model training is not limited in this embodiment of this application. For example, the period may be 500s.

In another possible implementation, before step S305, the method 300 further includes the following step (not shown in the figure):
S301. The first device fine-tunes the parameter of the second model based on the second dataset based on the first function. The second dataset is included in the first dataset.

It should be understood that the second dataset includes data related to the first function, and that the second dataset is included in the first dataset may be understood as that a time period for collecting the second dataset is included in a time period for collecting the first dataset.

As an example rather than a limitation, if the first device is a base station, the first device may fine-tune the parameters of the second model based on the second dataset according to required functions such as beam management and channel measurement.

As an example rather than a limitation, if the first device is an OAM, the first device may fine-tune the parameters of the second model based on the second dataset according to functions such as intent management.

As an example rather than a limitation, if the first device is an NWDAF, the first device may fine-tune the parameters of the second model based on the second dataset according to functions such as mobility prediction.

S302: The first device determines whether the performance of the fine-tuned second model meets the key performance indicator (Key Performance Indicator, KPI) requirements corresponding to the first function.

It should be understood that the KPI requirement is determined by the first device during the process of fine-tuning the second model.

In a possible implementation, if at least one performance of the first model obtained through fine-tuning in step S302 does not meet the corresponding KPI requirement, the first device performs step S305.

In another possible implementation, if the performance of the first model obtained through fine-tuning in step S302 meets the corresponding KPI requirements, the first device sequentially repeats step S301 and step S302. In this way, the first device can fine-tune the parameters of the first model based on the first function and the local data, thereby improving the performance of the model running locally on the first device.

Manner 2: Model fusion is performed based on the first model.

S307: The first device fine-tunes the parameters of the second model based on the first function and all or part of the local data, to generate the first model.

In a possible implementation, the second model on which the first device performs parameter fine-tuning in step S307 may be a model obtained after the first device performs lightweight processing on the second model based on the first function.

It should be understood that all or part of the local data used by the first device includes data related to the first function.

It should be understood that the all or part of the local data may be collected by the first device and stored locally, or may be obtained from another device and then stored locally. This is not limited in this embodiment of this application.

Based on the foregoing manner 1 or manner 2, the first device may generate the first model and send the first model by using step S310.

S320: The second device updates the first model based on the second model.

In a possible implementation, when the third information indicates that the first model is used to generate a training data set, the second device generates, based on the second model, a training data set used to update the first model, and performs model training on the second model based on the training data set, thereby updating the second model.

In another possible implementation, when the third information indicates that the first model is used to be fused with the second model, the second device fuses the second model and the first model to update the second model. A specific manner of fusing the second model and the first model is described in detail below, and details are not described herein again.

S330. The second device sends second information to the first device, and correspondingly, the first device receives the second information. The second information is used to indicate the updated second model.

It should be understood that a specific manner in which the second information indicates the updated second model is not limited in this embodiment of this application.

As an example instead of a limitation, if the second information includes the updated second model, the first device may obtain the updated second model after receiving the first information.

As an example instead of a limitation, the second information may include a storage address of the updated second model, and the first device may obtain the first model after receiving the second information based on the storage address of the updated second model.

Optionally, the first device may also send at least one of the performance information of the second model, the evaluation metric information of the second model, or the functional information of the second model to the second device.

It is easy to understand that the first device in the steps S310 to S330 may collect data and perform model training based on the collected data. In some possible embodiments, the first device is an MIF, meaning that the training data of the first network element is provided by another device (e.g., a base station), and the first device itself is only used for data training.

In these embodiments, the method 300 may further include the following steps (not shown in the figure):
S301': The first device fine-tunes the parameters of the second model based on the second function using the third dataset.

It should be understood that the fourth dataset is a collection of data related to the second function, where the second function includes one or more functions that the base station expects to achieve through the second model.

It should be understood that the fourth data set is obtained by the first device from the base station through a request, that is, before performing the above step S301', the first device needs to request the data collected by the base station from the base station.

S302': The first device sends the fine-tuned second model to the base station, and correspondingly, the base station receives the fine-tuned second model.

S303': The first device receives fourth information from the base station, where the fourth information is used to indicate a performance anomaly of the fine-tuned second model.

In these embodiments, the above step S305 may be replaced with:
S305': The first device performs model training based on all or part of the data collected by the base station, to generate the first model.

Among these, the base station collects all or part of the data, which at least includes a fourth data set, where the fourth data set is a collection of data related to the aforementioned second function. Moreover, the fourth data set includes the third data set, meaning that the time period during which the fourth data set is collected includes the time period during which the third data set is collected.

It should be understood that the data used by the first device for model training may be data obtained by the first device when it determines the need to generate the first model by requesting from the base station, or the data used by the first device for model training may be data reported by the base station and stored locally on the first device. This is not limited in this embodiment of the present application.

In some possible embodiments, before the first device performs S305', the first device needs to request all or part of the data collected by the base station from the base station.

The embodiments of this application do not limit a specific manner in which the first device requests all or part of the data collected by the base station from the first device.

As an example rather than a limitation, the first device periodically sends fourth information to the base station, where the fourth information is used to request all data collected by the base station, or the fourth information is used to request data collected by the base station that is related to the second function.

It should be understood that all data collected by the base station may be all data collected after the base station is put into operation; or, all data collected by the base station may be all data collected by the base station within an interval between receiving two pieces of request information; or, all data collected by the base station may be all data collected by the base station within a specific time period agreed upon by the first device and the base station. This embodiment of this application does not impose any limitation thereto.

It should be understood that the data related to the second function collected by the base station may be all data related to the second function collected by the base station after the base station is put into operation, or the data related to the second function collected by the base station may be data related to the second function collected by the base station within an interval between receiving two pieces of request information, or the data related to the second function collected by the base station may be data related to the second function collected by the first device within a specific time period agreed upon by the first device and the base station. This embodiment of this application does not impose any limitation thereto.

It should be understood that the first device may discard some or all of the data provided by the base station after performing model training, or the first device may store some or all of the data provided by the base station after performing model training. This is not limited in this embodiment of this application.

It should be understood that the trigger condition for the first device to perform step S305' is not limited in this embodiment of this application.

In a possible implementation, the trigger condition for step S305' is receiving the third information.

Furthermore, after the first device receives the third information, the first device may perform model training based on the data collected by the base station that is stored locally to generate the first model, or the first device may send fourth information to the base station to request the data collected by the base station, and perform model training based on the data to generate the first model.

In another possible implementation, the first device periodically performs model training based on local data. The embodiments of this application do not limit the period at which the first device performs model training. For example, the period may be 500 seconds.

Based on the aforementioned solution, the first device sends the first model to the second device, enabling the second device to generate a training dataset for updating the second model based on the first model, and to update the first model based on the training dataset. In this way, by sending the second model instead of the training data, the first device can save the communication overhead caused by the collection of training data for the second model between the first device and the second device.

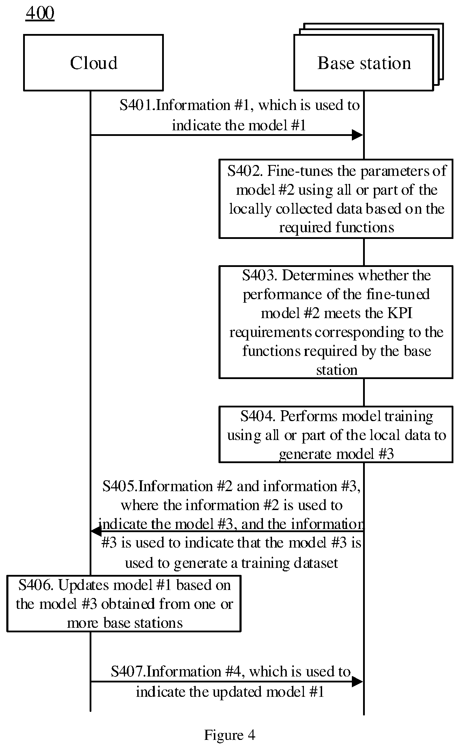

The following will explain the specific process of the method 300 by using the scenario shown in Figure 4, where the first device is capable of performing data collection and model training, as an illustration. In this scenario, the first device may be any one of a base station, an OAM, or an NWDAF. The following will use an example where the first device is a base station and the second device is a device supporting cloud services (hereinafter referred to as Cloud) for explanation.

FIG. 4 is a schematic diagram of a model training process 400 according to an embodiment of this application. As shown in the figure, the process 400 includes the following steps:
S401: The cloud sends information #1 to one or more base stations, and correspondingly, the one or more base stations receive the information #1.

Among them, the information #1 is used to indicate the model #1 (an example of the second model). For instance, the model #1 may be a foundational large model for wireless communication. In the embodiments of this application, the above step S401 may be understood as the Cloud making the foundational large model for wireless communication available at the base station end.

It should be understood that this embodiment of this application does not limit a specific manner in which the information #1 indicates the model #1. For a specific manner, refer to the related content of step S310, and details are not described herein again.

Optionally, when sending information #1, the Cloud may further send at least one of the model performance information of the model #1, the evaluation metric information of the model #1, and the model function information of the model #1 to the one or more base stations. For specific descriptions of the above information, refer to the related content of step S310, and details are not described herein again.

S402: Each base station fine-tunes the parameters of model #2 using all or part of the locally collected data based on the required functions.

In a possible implementation, the model #2 may be a model determined by the base station through information #1.

In another possible implementation, the model #2 may be a model obtained by the base station after performing lightweight processing on the model #1 based on the required function (i.e., the first function). The required function of the base station may be understood as one or more functions that the base station expects to achieve through the model #1.

It should be understood that all or part of the locally collected data mentioned above at least includes dataset #1, which is a collection of data related to the functions required by the base station and collected by the base station.

As an example and not a limitation, the functions required by the model may include beam management, channel measurement, and other functions required by the base station.

In the embodiments of this application, the model #2 may be an on-site model.

It should be understood that, in the process where the base station fine-tunes the parameters of the model #2, the KPI requirements corresponding to the functions required by the base station may be determined.

S403: Each base station determines whether the performance of the fine-tuned model #2 meets the KPI requirements corresponding to the functions required by the base station.

In a possible implementation, if the performance of the model #2 meets the KPI requirements for the functions needed by the base station, the base station repeats the above steps S402 and S403. In this way, the base station can fine-tune the parameters of the model #2 based on the functions required by itself and the local data, thereby improving the performance of the model deployed locally by the base station.

In another possible implementation, if the performance of the model #2 does not meet at least one of the KPI requirements for the functions needed by the base station, the base station performs the following step S404.

S404: The base station performs model training using all or part of the local data to generate model #3.

Among these, all or part of the local data of the base station at least includes dataset #2, which is a collection of data related to the functions required by the base station itself that the base station has collected.

In the embodiments of this application, the model #3 may be a data generation model.

S405: The base station sends information #2 (an example of the first information) and information #3 (an example of the third information) to the Cloud, and correspondingly, the Cloud receives the information #2 and the information #3.

Among them, the information #2 is used to indicate the model #3, and the information #3 is used to indicate that the model #3 is used to generate a training dataset. In the embodiments of this application, the foregoing step S405 may be understood as enabling the base station to make the model #3 available at the cloud end.

In some possible implementations, the information #2 and the information #3 may be included in a wireless large model training request message, where the wireless large model training request message is used to request to update the model #1.

Optionally, when sending information #2, the base station may send the base station at least one of the model performance information of the model #3, the evaluation metric information of the model #3, and the model function information of the model #3 to the Cloud.

Optionally, before sending the information #2, the base station may perform lightweight processing on the model #3 generated in step S404, and indicate the model #3 after the lightweight processing through the information #2.

S406: The Cloud updates model #1 based on the model #3 obtained from one or more base stations.

Specifically, the Cloud generates a training dataset based on the model #3 obtained from one or more base stations, and performs model training on the model #1 based on the training dataset, in order to update the model #1.

S407: The cloud sends information #4 (an example of the second information) to one or more base stations, and accordingly, the one or more base stations receive the information #4.

Herein, the information #4 is used to indicate the updated model #1. In this embodiment of this application, the foregoing step S407 may be understood as that the Cloud makes the updated model #1 available at the base station end.

Optionally, when sending information #4, the Cloud may also send at least one of the updated model performance information of the updated model #1, the evaluation metric information of the updated model #1, and the updated model function information of the updated model #1 to the one or more base stations.

Based on the above solution, the base station/OAM/NWDAF may generate model #3 based on local data and send it to the Cloud, so that the Cloud can generate a training dataset for updating model #1 based on the model #3, and update model #1 based on the training dataset. That is, the base station/OAM/NWDAF can save the communication overhead related to the collection of training data for model #1 between the base station/OAM/NWDAF and the Cloud by sending model #3 (which is used to generate the training dataset for updating model #1) to the Cloud instead of the training data,

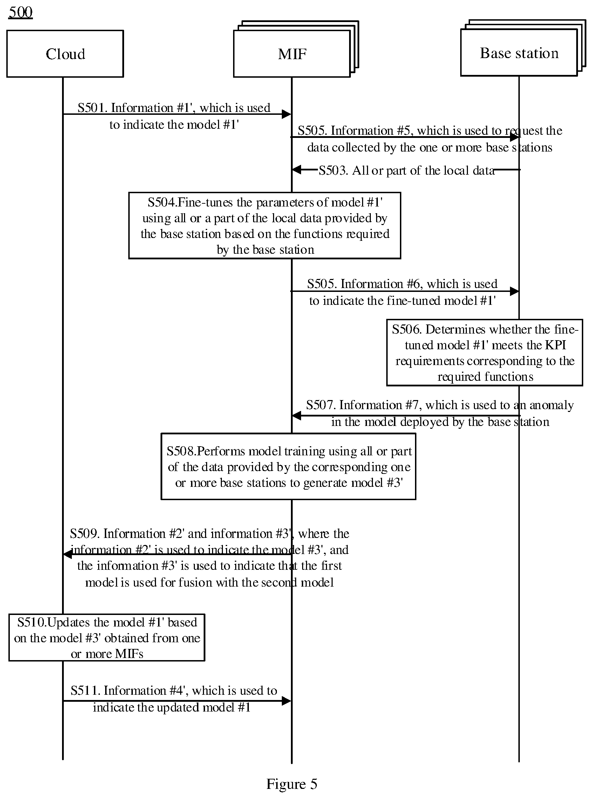

The following will illustrate the specific process of the method 300 by using the scenario shown in Figure 5, where the first device provides computing power (for example, for model training) to other devices, as an example. The following explanation will use an example where the first device is an MIF and the second device is a device that supports cloud services (hereinafter referred to as Cloud) for illustration.

FIG. 5 is a schematic diagram of a model training process 500 according to an embodiment of this application. As shown in the figure, the process 500 includes the following steps:
S501: The Cloud sends information #1' to one or more MIFs, and correspondingly, the one or more MIFs receive the information #1'.

Among them, the information #1' is used to indicate the model #1' (another example of the second model). For example, the model #1' may be a foundational large model for wireless communication. In this embodiment of this application, the foregoing step S401 may be understood as enabling the Cloud to make the foundational large model for wireless communication available at the MIF end.

It should be understood that this embodiment of this application does not limit a specific manner in which the information #1' indicates the model #1'. For a specific manner, refer to the related content of step S310, and details are not described herein again.

Optionally, when sending information #1', the cloud may further send at least one of the model performance information of the model #1', the evaluation metric information of the model #1', or the model function information of the model #1' to the one or more base stations.

It should be understood that each of the MIFs may be configured to provide computing power for one or more corresponding base stations, that is, each MIF may be configured to perform model training for one or more corresponding base stations. This is not limited in this application.

As an example rather than a limitation, the Cloud sends the above information #1' to MIF#1 and MIF#2, where MIF#1 may provide computing power for base station #1 and base station #2, and MIF#2 may provide computing power for base station #3.

It should be understood that before step S501, the base station corresponding to the one or more MIFs is configured with a model #2', where the model #2' may be the model #1 mentioned above, or the model #2' may be a model #1' obtained by fine-tuning the model #1 based on the functions required by the base station. The specific manner of configuring the model #2' for the base station corresponding to the one or more MIFs is not limited in this application. For the specific manner, refer to the related content of step S310, which is not described in detail herein.

S502: Each MIF sends information #5 to a corresponding one or more base stations, and correspondingly, the one or more base stations receive the information #5, where the information #5 is used to request the data collected by the one or more base stations.

In a possible implementation, the information #5 includes at least one of the identifier #1 and the identifier #2, where the identifier #1 is used to indicate a specific time period, so that each base station may report data collected during this specific time period based on the identifier #1, and the identifier #2 is used to indicate a specific function, so that each base station may report data related to this specific function based on the identifier #2.

S503: Each base station sends all or part of the local data to the corresponding MIF.

Specifically, each base station samples the local data based on the information #5 mentioned above, and sends the sampled training data to the corresponding MIF. The all or part of the local data sent by the base station to the corresponding MIF includes at least dataset #3, where dataset #3 is data related to the functions required by the base station. The functions required by the base station can be understood as one or more functions that the base station expects to achieve through model #1.

It should be understood that when the information #5 includes the identifier #1, the base station samples the local data based on the identifier #1, and sends all or part of the data collected within the specific time period indicated by the identifier #1 to the corresponding MIF.

It should be understood that when the information #5 includes the identifier #2, the base station samples the local data based on the identifier #2 and sends all or part of the data related to the specific function indicated by the identifier #2 to the corresponding MIF.

S504: The MIF fine-tunes the parameters of model #1' using all or part of the local data provided by the base station based on the functions required by the base station.

Specifically, for the detailed process by which the MIF fine-tunes the model #1', reference may be made to the relevant content of method 300, and no further elaboration will be provided herein.

S505. Each MIF sends information #6 to a corresponding one or more base stations, where the information #6 is used to indicate the fine-tuned model #1'.

Correspondingly, after receiving the fine-tuned model #1', the one or more base stations update their local deployment.

S506: Each base station determines whether the fine-tuned model #1' meets the KPI requirements corresponding to the required functions.

In some possible implementations, if the performance of the model #1' meets the KPI requirements for the functions needed by the base station as mentioned above, steps S502 to S506 are repeated. In this way, the MIF can fine-tune the parameters of the model #1' based on the functions required by the base station and the data collected by the base station, thereby improving the performance of the model deployed locally on the base station.

In another possible implementation, if the performance of the model #1' does not meet at least one of the KPI requirements for the functions needed by the base station, the base station performs the following step S507.

S507: The base station sends information #7 (an example of the fourth information) to the corresponding MIF, and accordingly, the corresponding MIF receives the information #7. The information #6 is used to indicate an anomaly in the model deployed by the base station.

S508: The MIF performs model training using all or part of the data provided by the corresponding one or more base stations to generate model #3'.

Among them, all or part of the data provided by the one or more base stations at least include a dataset #4, which is a collection of data related to the functions required by the base stations and reported by the one or more base stations. Moreover, the dataset #4 includes the aforementioned dataset #3, meaning that the time period during which the dataset #4 is collected includes the time period during which the dataset #3 is collected.

It should be understood that this embodiment of this application does not limit the specific manner in which the MIF obtains the dataset #4.

As an example rather than a limitation, after receiving the data reported by the base station through the aforementioned step S503, the MIF locally stores the data, so that when performing step S508, model training is conducted based on the locally stored data.

As an example rather than a limitation, before performing the above-mentioned step S507, the MIF performs the following steps (not shown in the figure):
S5081: The MIF sends information #8 (an example of the fifth information) to one or more corresponding base stations, and accordingly, the one or more base stations receive the information #8. The information #8 is used to request the base stations to report the collected data.

Optionally, the information #8 includes at least one of the identifier #1 or the identifier #2, so that the base station can send corresponding data based on the identifier #1 or the identifier #2.

S5082: Each base station reports all or part of the local data to the MIF.

Optionally, the MIF may further periodically send information #8 to one or more corresponding base stations, to request the base stations to report the collected data.

Based on the foregoing manner, the MIF may obtain the data collected by the base station, and perform model training based on the data to generate the model #3'. For example, the model #3' is a data generation model.

S509: The MIF sends information #2' (another instance of the second information) and information #3' (another instance of the third information) to the Cloud, and correspondingly, the Cloud receives the information #2' and the information #3'.

Among them, the information #2' is used to indicate the model #3', and the information #3' is used to indicate that the first model is used for fusion with the second model. In the embodiments of this application, the step S509 may be understood as the MIF making the model #3' available at the Cloud end.

In some possible implementations, the information #2' and the information #3' may be included in a wireless large model training request message, where the wireless large model training request message is used to request an update of the model #1'.

Optionally, the MIF may send, when sending information #2', at least one of the model performance information of the model #3', the evaluation metric information of the model #3', and the model function information of the model #3' to the Cloud.

Optionally, before the base station sends the information #2', the base station may perform lightweight processing on the model #3' generated in step S408, and indicate the model #3' after the lightweight processing through the information #2'.

S510: The Cloud updates the model #1' based on the model #3' obtained from one or more MIFs.

Specifically, Cloud generates a training dataset based on the model #3' obtained from one or more MIFs, and performs model training on model #1' according to this training dataset to update model #1'.

S511: The Cloud sends information #4' to one or more MIFs, and accordingly, the one or more base stations receive the information #4'.

Among them, the information #4' is used to indicate the updated model #1. In this embodiment of this application, the foregoing step S407 may be understood as that the Cloud makes the updated model #1' available at the MIF end.

Optionally, when sending information #4', the cloud may further send, to the one or more MIFs, at least one of the following items: the updated model performance information of the updated model #1', the evaluation metric information of the updated model #1', and the model function information of the updated model #1'.

Furthermore, the one or more MIFs may send the updated model #1 to the corresponding one or more base stations.

Optionally, before each MIF sends the updated model #1' to one or more corresponding base stations, the MIF may further perform lightweight processing on the updated model #1' based on the functions required by the base station, and/or fine-tune the parameters of the updated model #1' using the data collected by the base station according to the functions required by the base station. In this process, the MIF may obtain the data collected by the base station by repeating the above step S502.

Based on the above solution, the MIF may send model #3' to the Cloud based on the data reported by the base station, enabling the Cloud to generate a training dataset for updating model #1' based on model #3', and update model #1' based on the training dataset. This means that the MIF can save the communication overhead associated with collecting training data for model #1' between the MIF and the Cloud by sending model #3'-used to generate the training dataset for updating model #1'-to the Cloud, rather than sending training data directly.

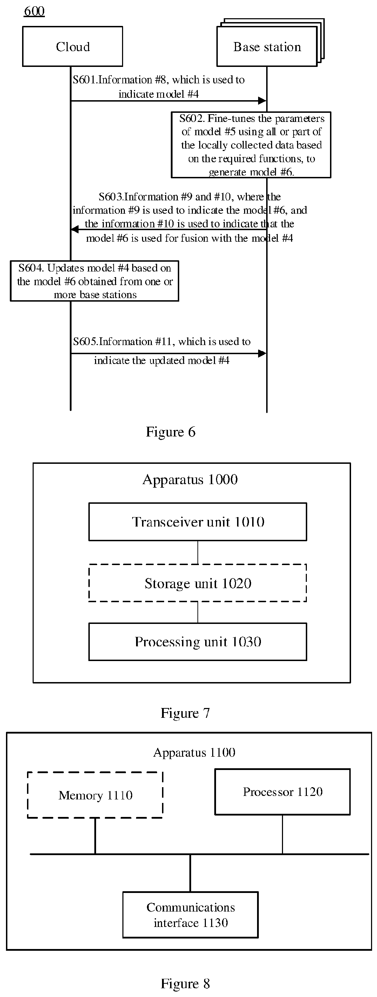

The model training method 600 provided in the embodiments of this application will be described below in conjunction with FIG. 6. In the method 600, the first device may send a locally deployed model to the second device, so that the second device can update the second model based on the locally deployed model of the first device. In the method 600, the first device may be any one of a base station, an OAM, an NWDAF, or an MIF. The following will use an example where the first device is a base station and the second device is a Cloud for illustration.

FIG. 6 is a schematic diagram of a model training process 600 according to an embodiment of this application. As shown in the figure, the process 600 includes the following steps:
S601. The Cloud sends information #8 to one or more base stations, and correspondingly, the one or more base stations receive the information #8.

The information #8 is used to indicate the model #4 (an example of the second model). For instance, the model #4 may be a foundational wireless communication model. In the embodiments of this application, the above step S601 may be understood as the Cloud making the foundational wireless communication model available at the base station side.

It should be understood that this embodiment of this application does not limit a specific manner in which the information #8 indicates the model #4. For the specific manner, refer to the related content of step S310, and details are not described herein again.

Optionally, when sending the information #8, the cloud may further send at least one of the model performance information of the model #4, the evaluation metric information of the model #4, and the model function information of the model #4 to the one or more base stations. For specific descriptions of the foregoing information, refer to the related content of step S310, and details are not described herein again.

S602: Each base station fine-tunes the parameters of model #5 (an example of the first model) using all or part of the locally collected data based on the required functions, to generate model #6.

In a possible implementation, the model #5 may be a model determined by the base station through information #1.

In another possible implementation, the model #5 may be a model obtained by the base station after performing lightweight processing on the model #4 according to a required function (that is, the first function). The required function of the base station may be understood as one or more functions that the base station expects to implement through the model #4.

It should be understood that all or part of the foregoing local data at least includes dataset #5, where dataset #5 is a collection of data related to the functions required by the first device and collected by the first device.

In the embodiments of this application, the model #5 may be an on-site model.

S603: The base station sends information #9 (an example of the first information) and information #10 (an example of the third information) to the Cloud, and correspondingly, the Cloud receives the information #9 and the information #10.

The information #9 is used to indicate the model #6, and the information #10 is used to indicate that the model #6 is used for fusion with the model #4. In the embodiments of this application, the foregoing step S405 may be understood as a step in which the base station makes the model #6 available at the cloud end.

In some possible implementations, the information #9 and the information #10 may be included in a wireless large model training request message, where the wireless large model training request message is used to request to update the model #4.

Optionally, the base station may send at least one of the model performance information of model #6, the evaluation metric information of model #6, and the model function information of model #6 to the Cloud when sending information #9.

Optionally, before sending the information #9, the base station may perform lightweight processing on the model #6 generated in step S404, and indicate the model #6 after the lightweight processing through the information #9.

S604: The Cloud updates model #4 based on the model #6 obtained from one or more base stations.

Specifically, the Cloud fuses the model #6 obtained from one or more base stations with the model #4 to update the second model.

It should be understood that the manner of fusing the model #6 and the model #4 is not limited in this embodiment of this application.

As an example rather than a limitation, model #6 and model #4 may undergo knowledge distillation, where the model parameters of model #6 and model #4 are directly updated by calculating methods such as summation and averaging on the model parameters of model #4.

S605: The Cloud sends information #11 (an example of the second information) to one or more base stations, and accordingly, the one or more base stations receive the information #11.

Among them, the information #11 is used to indicate the updated model #4. In this embodiment of this application, the foregoing step S605 may be understood as the Cloud making the updated model #4 available at the base station end.

Optionally, when sending information #11, the cloud may further send to the one or more base stations at least one of the following items: the updated model performance information of the updated model #4, the evaluation metric information of the updated model #4, and the model function information of the updated model #4.

Based on the foregoing solution, the base station/OAM/NWDAF/MIF may fine-tune the parameters of model #4 and generate model #6 using all or part of the local data based on the functions required by the base station/OAM/NWDAF/MIF, so that the Cloud may fuse the model #6 with the model #4 to update the model #4. That is, the base station/OAM/NWDAF/MIF may save the communication overhead related to the collection of the training data of the model #4 between the base station/OAM/NWDAF/MIF and the Cloud by sending the model #6 (which is used for fusion with the model #4) to the Cloud instead of the training data.

The following describes an apparatus embodiment corresponding to the method embodiments of this application. The following briefly describes the apparatus, and for specific implementation steps and details of the solutions, refer to the foregoing method embodiments.

To implement the functions in the method provided in this application, both the first device and the second device may include a hardware structure and/or a software module, and implement the foregoing functions in a form of the hardware structure, the software module, or a combination of the hardware structure and the software module. Whether a function in the foregoing functions is performed through the hardware structure, the software module, or the combination of the hardware structure and the software module depends on particular applications and design constraints of the technical solutions.

FIG. 7 is a schematic diagram of a model training apparatus 1000 according to an embodiment of this application. The apparatus 1000 may include a transceiver unit 1010, a storage unit 1020, and a processing unit 1030. The transceiver unit 1010 is configured to receive or send instructions and/or data. The transceiver unit 1010 may also be referred to as a communication interface or a communication unit. The storage unit 1020 is configured to implement a corresponding storage function, and store corresponding instructions and/or data. The processing unit 1030 is configured to perform data processing, so that the apparatus 1000 implements the foregoing model training method.

In a possible implementation, the apparatus 1000 may include only the transceiver unit 1010 and the processing unit 1030, and do not include the storage unit 1020.

In a design, the apparatus 1000 may perform the actions performed by the first device in the foregoing method embodiments.

In an embodiment, the apparatus 1000 includes a transceiver unit 1010, configured to send first information to a second device, where the first information is used to indicate a first model, the first model is obtained through training by the first device, the first model is used to generate a training data set used to update a second model, and the second model is obtained through training by the second device; and the transceiver unit is further configured to receive second information, where the second information is used to indicate the updated second model.

In a possible implementation, the apparatus 1000 further includes a processing unit 1030, configured to perform model training based on all or part of the local data to generate the first model, where the all or part of the local data includes a first data set, the first data set includes data related to a first function, and the first function is one or more functions that the model training apparatus expects to implement by using the second model.

In an embodiment, the apparatus 1000 includes: a transceiver unit 1010, configured to send first information to a second device, where the first information is used to indicate a first model, the first model is obtained through training by the first device, the first model is used to update a second model by being fused with the second model, and the second model is obtained through training by the second device; and the transceiver unit is further configured to receive second information, where the second information is used to indicate the updated second model.

In a possible implementation, the apparatus 1000 further includes a processing unit 1030, configured to fine-tune a parameter of the second model based on all or part of the local data based on the first function, to generate the first model, where the first function is one or more functions that the first device expects to implement by using the second model.

In an embodiment, the apparatus 1000 includes: a transceiver unit 1010, configured to send first information to a second device, where the first information is used to indicate a first model, the first model is obtained through training by the first device, the first model is used to generate a training dataset for updating a second model, or the first model is used to update the second model by being fused with the second model, and the second model is obtained through training by the second device; and the transceiver unit is further configured to receive second information, where the second information is used to indicate the updated second model.

In a possible implementation, the apparatus 1000 further includes a processing unit 1030, configured to perform model training based on all or part of the local data to generate the first model, where the all or part of the local data includes a first data set, the first data set includes data related to a first function, and the first function is one or more functions that the model training apparatus expects to implement by using the second model.

In a possible implementation, the processing unit 1030 is further configured to fine-tune the parameter of the second model based on all or part of the local data based on the first function, to generate the first model, where the first function is one or more functions that the first device expects to implement by using the second model.

In a design, the apparatus 1000 may perform the actions performed by the second device in the foregoing method embodiments.

In an embodiment, the apparatus 1000 includes a transceiver unit 1010 and a processing unit 1030. The transceiver unit 1010 is configured to receive first information, where the first information is used to indicate a first model, the first model is obtained by training by the first device, the first model is used to generate a training data set used to update the second model, and the second model is obtained by training by the first device. The processing unit 1030 is configured to update the second model based on the first model. The transceiver unit 1010 is further configured to send second information to the first device, where the second information is used to indicate the updated second model.

In an embodiment, the apparatus 1000 includes a transceiver unit 1010 and a processing unit 1030. The transceiver unit 1010 is configured to receive first information, where the first information is used to indicate a first model, the first model is obtained by training by the first device, the first model is used to update a second model by being fused with the second model, and the second model is obtained by training by the first device. The processing unit 1030 is configured to update the second model based on the first model. The transceiver unit 1010 is further configured to send second information to the first device, where the second information is used to indicate the updated second model.

In an embodiment, the apparatus 1000 includes a transceiver unit 1010 and a processing unit 1030. The transceiver unit 1010 is configured to receive first information, where the first information is used to indicate a first model, the first model is obtained by training by the first device, the first model is used to generate a training dataset for updating the second model, or the first model is used to update the second model by being fused with the second model, and the second model is obtained by training by the first device. The processing unit 1030 is configured to update the second model based on the first model. The transceiver unit 1010 is further configured to send second information to the first device, where the second information is used to indicate the updated second model.

FIG. 8 is a schematic diagram of another model training apparatus 1100 according to an embodiment of this application.

The apparatus 1100 includes a memory 1110, a processor 1120, and a communications interface 1130. The memory 1110, the processor 1120, and the communications interface 1130 are connected through an internal connection path. The memory 1110 is configured to store an instruction, and the processor 1120 is configured to execute the instruction stored in the memory 1110, to control the communications interface 1130 to obtain information, or enable the apparatus 1100 to implement the foregoing model training method. Optionally, the memory 1110 may be coupled to the processor 1120 by using an interface, or may be integrated with the processor 1120.

It should be noted that the communication interface 1130 uses a transceiver device such as a transceiver (for example, a transceiver) for the purpose of communication. The communication interface 1130 may further include an input/output interface (input/output interface).

The processor 1120 stores one or more computer programs, where the one or more computer programs include instructions. When the instructions are run by the processor 1120, the apparatus 1100 is enabled to perform the model training method in the foregoing embodiments.

In an implementation process, the steps of the foregoing methods may be implemented by an integrated logic circuit of hardware in the processor 1120 or by instructions in a form of software. The methods disclosed in embodiments of this application may be directly performed and completed by a hardware processor, or may be performed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1110. The processor 1120 reads information in the memory 1110, and completes the steps of the foregoing methods in combination with hardware of the processor. To avoid repetition, details are not described herein again.

In a possible implementation, the apparatus 1100 may include only the processor 1120 and the communications interface 1130, and does not include the memory 1110.

Optionally, the communications interface 1130 in FIG. 8 may implement the transceiver unit 1010 in FIG. 7, and the processor 1120 in FIG. 8 may implement the processing unit 1030 in FIG. 7.

An embodiment of this application further provides a computer-readable storage medium, where the computer-readable storage medium stores program code, and when the computer program code is run on a computer, the computer is enabled to perform any one of the methods in FIG. 3 to FIG. 7.

An embodiment of this application further provides a computer program product. The computer program product includes a computer program, and when the computer program is run, a computer is enabled to perform any one of the methods in FIG. 3 to FIG. 7.

An embodiment of this application further provides a chip, including a circuit, where the circuit is configured to perform any one of the methods in FIG. 3 to FIG. 7.

An embodiment of this application further provides a system, including a first device and a second device. The first device is configured to perform the actions/steps performed by the first device in FIG. 3 to FIG. 7, and the second device is configured to perform the actions/steps performed by the second device in FIG. 3 to FIG. 7.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments, and details are not described herein again.

In several embodiments provided in this application, it should be understood that the disclosed systems, apparatuses, and methods may be implemented in other ways. For example, the apparatus embodiments described above are merely examples. For example, the division of the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected according to an actual need to achieve the objectives of the solutions in embodiments.

In addition, the functional units in embodiments of this application may be integrated into one processing unit, each of the units may exist alone physically, or two or more units may be integrated into one unit.

When the functions are implemented in the form of software functional units and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application should fall within the protection scope of this application. Therefore, the protection scope of this application should be determined according to the protection scope of the claims.

## Claims

1. A model training method, comprising:
sending, by a first device, first information to a second device, wherein the first information is used to indicate a first model, the first model is obtained by training by the first device, the first model is used to generate a training dataset for updating a second model, or the first model is used to fuse with the second model to update the second model, wherein the second model is obtained by training by the second device; and
receiving, by the first device, second information from the second device, wherein the second information is used to indicate the updated second model.

2. The method according to claim 1, wherein the method further comprises:
sending, by the first device, third information to the second device, wherein the third information is used to indicate a use manner of the first model, and the use manner of the first model comprises generating the training dataset based on the first model, or performing model fusion based on the first model.

3. The method according to claim 1 or 2, wherein when the first model is used to generate a training dataset used to update a second model, before the sending the first information to the second device, the method further comprises:
performing, by the first device, model training based on all or part of the local data to generate the first model, wherein the all or part of the local data comprises a first dataset, the first dataset is a set of data related to a first function, and the first function is one or more functions that the first device expects to implement by using the second model.

4. The method according to claim 3, wherein before the performing model training based on all or part of the local data, the method further comprises:
fine-tuning, by the first device, the parameter of the second model based on the second dataset based on the first function, wherein the second dataset comprises data related to the first function, and the second dataset is included in the first dataset; and
determining, by the first device, that performance of the second model after fine-tuning and related to at least one of the first functions does not meet a corresponding performance indicator requirement.

5. The method according to claim 1 or 2, wherein when the first model is used to merge with the second model to update the second model, before the sending the first information to the second device, the method further comprises:
fine-tuning, by the first device, the parameter of the second model based on all or part of the local data based on a first function, to generate the first model, wherein the first function is one or more functions that the first device expects to implement by using the second model.

6. The method according to claim 1 or 2, wherein the first device is a mobile intelligent network element, and the second device is a device supporting cloud services.

7. The method according to claim 6, wherein the method further comprises:
obtaining, by the first device, a third dataset, wherein the third dataset comprises data related to a second function that is collected by a base station, and the second function comprises one or more functions that the base station desires to achieve through the second model; and
fine-tuning, by the first device, the parameters of the second model based on the third dataset according to the second function.

8. The method of claim 7, wherein before the sending the first information to the second device, the method further comprises:
receiving, by the first device, fourth information, wherein the fourth information is used to indicate an abnormal performance of the fine-tuned second model;
determining, by the first device, a fourth data set based on the fourth information, wherein the fourth data set is stored locally by the first device, or the fourth data set is obtained by the first device from the base station; and
performing, by the first device, model training based on the fourth dataset to generate the first model.

9. The method according to claim 8, wherein when the fourth data set is obtained by the first device from the base station, the determining, by the first device, a fourth data set based on the fourth information comprises:
sending, by the first device, fifth information to a base station based on the fourth information, wherein the fifth information is used to request data collected by the base station; and
receiving, by the first device, sixth information, wherein the sixth information is used to indicate the fourth dataset.

10. The method according to any one of claims 1 to 9, wherein before the sending the first information to the second device, the method further comprises:
performing, by the first device, lightweight processing on the first model.

11. A model training method, comprising:
receiving, by a second device, first information from a first device, wherein the first information is used to indicate a first model, the first model is obtained by training by the first device, the first model is used to generate a training dataset for updating a second model, or the first model is used to be fused with the second model to update the second model, wherein the second model is obtained by training by the second device; and
updating, by the second device, the second model based on the first model;
sending, by the second device, second information to the first device, wherein the second information is used to indicate the updated second model.

12. The method according to claim 11, wherein the method further comprises:
receiving, by the second device, third information from the first device, wherein the third information is used to indicate a use manner of the first model, and the use manner of the first model comprises generating the training dataset based on the first model, or performing model fusion based on the first model.

13. The method according to claim 11 or 12, wherein when the first model is used to generate a training dataset for updating a second model, the updating, by the second device, the second model based on the first model comprises:
generating, by the second device, a training dataset based on the first model; and
training, by the second device, the second model based on the training dataset, to update the second model.

14. The method according to claim 11 or 12, wherein when the first model is used to be fused with the second model to update the second model, the updating, by the second device, the second model based on the first model comprises:
fusing, by the second device, the first model and the second model, to update the second model.

15. A model training method, comprising:
sending, by a first device, first information to a second device, wherein the first information is used to indicate a first model, the first model is obtained by training by the first device, the first model is used to generate a training dataset for updating a second model, and the second model is obtained by training by the second device; and
receiving, by a first device, second information from the second device, wherein the second information is used to indicate an updated second model.

16. The method according to claim 15, wherein before the sending the first information to the second device, the method further comprises:
performing, by the first device, model training based on all or part of local data to generate the first model, wherein the all or part of the local data comprises a first dataset, the first dataset comprises data related to a first function, and the first function is one or more functions that the first device expects to implement through the second model.

17. The method according to claim 16, wherein before the performing model training based on all or part of the local data, the method further comprises:
fine-tuning, by the first device, the parameters of the second model based on the first function using a second dataset, wherein the second dataset comprises data related to the first function, and the second dataset is included in the first dataset; and
determining, by the first device, that the performance of the second model after fine-tuning, which is related to at least one of the functions in the first function, does not meet the corresponding performance indicator requirements.

18. The method according to any one of claims 15 to 17, wherein the first device is a mobile intelligent network element, and the second device is a device supporting cloud services.

19. The method according to claim 18, wherein the method further comprises:
obtaining, by the first device, a third data set, wherein the third data set comprises data related to a second function that is collected by a base station, and the second function comprises one or more functions that the base station desires to achieve through the second model; and
fine-tuning, by the first device, the parameters of the second model based on the third dataset according to the second function.

20. The method of claim 19, wherein before the sending the first information to the second device, the method further comprises:
receiving, by the first device, fourth information, wherein the fourth information is used to indicate an abnormal performance of the fine-tuned second model; and
determining, by the first device, a fourth data set based on the fourth information, wherein the fourth data set is stored locally by the first device, or the fourth data set is obtained by the first device from the base station, wherein the fourth data set comprises the third data set; and
performing, by the first device, model training based on the fourth data set to generate the first model.

21. The method according to claim 20, wherein the method further comprises:
sending, by the first device, fifth information to a base station based on the fourth information, wherein the fifth information is used to request data collected by the base station;
The first device receives sixth information, wherein the sixth information is used to indicate the fourth dataset.

22. The method according to any one of claims 15 to 21, wherein before the sending first information to the second device, the method further comprises:
performing, by the first device, lightweight processing on the first model.

23. A model training method, comprising:
receiving, by a second device, first information, wherein the first information is used to indicate a first model, the first model is obtained by training by the first device, the first model is used to generate a training dataset for updating the second model, and the second model is obtained by training by the second device;
updating, by the second device, the second model based on the first model;
sending, by the second device, second information to the first device, wherein the second information is used to indicate the updated second model.

24. The method according to claim 23, wherein the updating, by the second device, the second model based on the first model comprises:
generating, by the second device, a training dataset based on the first model;
training, by the second device, the second model based on the training dataset, to update the second model.

25. A model training method, comprising:
sending, by a first device, first information to a second device, wherein the first information is used to indicate a first model, the first model is obtained by training by the first device, the first model is used to fuse with a second model to update the second model, and the second model is obtained by training by the second device;
receiving, by a first device, second information, wherein the second information is used to indicate an updated second model.

26. The method of claim 25, wherein the method further comprises:
fine-tuning, by the first device, the parameter of the second model based on all or part of the local data based on a first function, to generate the first model, wherein the first function is one or more functions that the first device expects to implement by using the second model.

27. The method of claim 26, wherein the all or part of the local data comprises at least a second data set, and the second data set is a set of data related to the first function.

28. A model training method, comprising:
receiving, by a second device, first information from a first device, wherein the first information is used to indicate a first model, the first model is obtained by training by the first device, the first model is used to update a second model by being fused with the second model, and the second model is obtained by training by the first device;
updating, by the second device, the second model based on the first model;
sending, by the second device, second information to the first device, wherein the second information is used to indicate the updated second model.

29. The method according to claim 28, wherein the updating, by the second device, the second model based on the first model comprises: fusing, by the second device, the first model and the second model to update the second model.

30. A model training apparatus, comprising a module or unit configured to perform the method according to any one of claims 1 to 10, or comprising a module or unit configured to perform the method according to any one of claims 11 to 14, or comprising a module or unit configured to perform the method according to any one of claims 15 to 22, or comprising a module or unit configured to perform the method according to claim 23 or 24, or comprising a module or unit configured to perform the method according to any one of claims 25 to 27, or comprising a module or unit configured to perform the method according to claim 28 or 29.

31. A model training apparatus, comprising a processor, wherein the processor is configured to: execute a computer program or instructions, or through a logic circuit,
so that the model training apparatus performs the method according to any one of claims 1 to 10, or
so that the model training apparatus performs the method according to any one of claims 11 to 14, or
so that the model training apparatus performs the method according to any one of claims 15 to 22, or
so that the model training apparatus performs the method according to claim 23 or 24, or
so that the model training apparatus to perform the method according to any one of claims 25 to 27, or
so that the model training apparatus to perform the method according to claim 28 or 29.

32. The apparatus according to claim 31, wherein the communication apparatus further comprises a memory, and the memory is configured to store the computer program or instructions.

33. The apparatus according to claim 31 or 32, wherein the model training apparatus further comprises a communication interface, and the communication interface is configured to input and/or output a signal.

34. A computer-readable storage medium, wherein the computer-readable storage medium stores a computer program or instructions, and when the computer program or the instructions are run on a computer,
cause the method according to any one of claims 1 to 10 to be performed, or
cause the method according to any one of claims 11 to 14 to be performed, or
cause the method according to any one of claims 15 to 22 to be performed, or
cause the method according to claim 23 or 24 to be performed, or
cause the method according to any one of claims 25 to 27 to be performed, or,
to cause the method according to claim 28 or 29 to be performed.

35. A computer program product, comprising instructions, wherein when the instructions are run on a computer,
to cause the method according to any one of claims 1 to 10 to be performed, or
to cause the method according to any one of claims 11 to 14 to be performed, or
to cause the method according to any one of claims 15 to 22 to be performed, or,
enabling the method according to claim 23 or 24 to be performed, or
enabling the method according to any one of claims 25 to 27 to be performed, or
enabling the method according to claim 28 or 29 to be performed.

36. A system, comprising: a first device and a second device, wherein the first device is configured to perform the method according to any one of claims 1 to 10, 15 to 22, or 25 to 27, and the second device is configured to perform the method according to any one of claims 11 to 14, 23, 24, or 28 or 29.
